# EUROPÄISCHE PATENTSCHRIFT

(11) **EP 3 888 446 B1**
(45) Veröffentlichungstag und Bekanntmachung des Hinweises auf die Patenterteilung: **27.09.2023**
(21) Anmeldenummer: 21000078.2
(22) Anmeldetag: 17.03.2021
(51) Int. Cl.: A01D 89/00, A01D 80/02

(54) **AUFNAHMEVORRICHTUNG AN EINER ERNTEMASCHINE**
HOLDER DEVICE FOR A HARVESTING MACHINE
DISPOSITIF DE RÉCEPTION D'UNE MOISSONNEUSE

(30) Priorität: 19.03.2020 DE 102020001828; 30.06.2020 DE 202020002809 U
(43) Veröffentlichungstag der Anmeldung: 06.10.2021
(73) Patentinhaber: Ludwig Bergmann GmbH, 49424 Goldenstedt (DE)
(72) Erfinder: Kleine Niesse, Richard, 49536 Lienen (DE)
(74) Vertreter: Eisenführ Speiser

(56) Entgegenhaltungen:
- EP-A1- 3 108 742
- EP-A1- 3 416 473
- DE-A1-102018 121 273
- DE-B3-102013 109 678

## Beschreibung

Die Erfindung betrifft eine Aufnahmevorrichtung an einer Erntemaschine gemäß Oberbegriff des Anspruches 1.

Derartige Aufnahmevorrichtungen verwendet man z.B. an Erntemaschinen wie Ladewagen, Feldhäckslern oder Ballenpressen zur Aufnahme von Viehfutter. Die rotierenden Aufnahmevorrichtungen dienen mit ihren Aufnahmezinken dazu, das auf dem Boden liegende Erntegut aufzunehmen und einer weiterverarbeitenden Vorrichtung wie etwa einer Presse eines Ladewagens zuzuführen. Das von den Aufnahmezinken vom Boden aufgenommene und über die Drehung der Aufnahmevorrichtung nach oben geförderte Erntegut wird im Bereich der Oberseite der Trommel von einem üblicherweise kammartig ausgebildeten Abstreifer von der Aufnahmevorrichtung abgezogen. Durch den nicht vermeidbaren Kontakt der Aufnahmezinken mit dem Untergrund, auf dem das Erntegut liegt, kommt es zu mechanischen Belastungen und Abnutzungen der Aufnahmezinken, die bis hin zu einem Abbrechen der Zinken führen können. Hierdurch müssen einzelne oder alle der Aufnahmezinken abhängig von jeweiliger Abnutzung und Zerstörung von Zeit zu Zeit ausgewechselt werden.

Eine bekannte Aufnahmevorrichtung dieser Art gemäß der DE 10 2013 109 678 B3 oder der EP 2 845 463 B1 besteht aus einer Trommel mit Zinkentaschen, die im Trommelmantel eingelassen und fest mit der Trommel verbunden z.B. verschweißt sind. Die eigentlichen Zinken werden dann in die Taschen eingeschraubt. Derartige Taschen sind aus mehreren Einzelteilen mit komplizierter Geometrie gefertigt, was sehr aufwändig ist. Zudem müssen die Zinkentaschen gegenüber der Trommel so abgedichtet eingebaut sein, etwa durch die rundum der Kanten der Taschen verlaufende Verschweißung, dass Erntegut nicht an den Zinken vorbei über die Taschen in das Innere der Trommel eindringen und diese verstopfen kann. Dies bedingt eine sehr genaue Fertigung der als Blechteile gebildeten Taschen sowie eine aufwändige Verbindung mit der Trommel ohne Spalten oder verbleibende Öffnungen zwischen Taschen und Trommel. Hierdurch wird die Anbringung der Taschen teuer und aufwändig. Weiterhin sind auf dem Trommelmantel Bodenabstandsringe angebracht, die verhindern sollen, dass die Trommel selbst mit dem Boden in Kontakt kommt. Im hinteren Bereich ist ein Abstreiferkamm mit unterschiedlich geformten Abstreifern vorgesehen. Im Bereich der Bodenabstandsringe übergreifen diese Abstreifer die Bodenabstandsringe. Dies führt unweigerlich dazu, dass sich das zu fördernde Material zwischen den Ringen und Abstreifern festsetzt. Nachteilig ist auch, dass bei den übrigen Abstreifern keine Möglichkeit vorgesehen ist, Erntegut, welches sich bekanntlich an den Spitzen der Abstreifer festsetzt, abzuräumen. Ein weiterer Nachteil dieser Lösung ist der Verschleiß an den Zinkentaschen, der sich während des Betriebes nicht vermeiden lässt. Bei Verschleiß der Taschen muss die komplette Trommel ausgetauscht werden, was sehr kostenintensiv ist.

Weiterhin ist mit der DE 10 2014 117 740 A1 eine Aufnahmevorrichtung offenbart, bei der aneinandergereihte Segmente mit überstehenden Ringen den Trommelmantel ergeben. Die Taschen zur Zinkenaufnahme sind in den Segmenten selbst eingelassen. So ein einzelnes Segment besteht aus einer Vielzahl von Einzelteilen, die zu einer Einheit verschweißt sind. Anschließend werden die Segmente auf ein Rohr aufgeschoben und verschweißt. Beim Aufschieben der Segmente auf das Rohr wird der Abstand der Segmente durch sogenannte Abstandshalter festgelegt. Bei der Vielzahl der Segmente und aufgrund der nicht vermeidbaren Toleranzen kann die Länge der Trommel stark variieren. Dies führt dazu, dass die kammartig oberhalb der Segmente der Trommel angeordneten Abstreifer an den Ringen anlaufen oder der Spalt zwischen Abstreifer und Ring so groß wird, dass sich Erntegut daran absetzen kann, was zu Störungen führt. Bei der Herstellung der Trommeln ist somit mit einer hohen Ausschussrate zu rechnen. Die Herstellung solcher Trommeln ist mit den genannten Nachteilen daher aufwändig und teuer. Ein weiterer Nachteil kann in der auftretenden Korrosion gesehen werden. An den Flanschen der Segmente werden sich im Betrieb bei widrigen Wetterverhältnissen Grassäfte und Feuchtigkeit absetzen. Ein Ablauf für diese korrosionsfördernden Medien aus der Trommel heraus ist nicht vorgesehen. Da die Blechstärken relativ gering sind, führt die Korrosion relativ schnell zum Ausfall der Trommel, weil das aufzubringende Drehmoment für die Rech- und Förderarbeit von der Trommel übertragen werden muss. Bei den schrägen Abstreifern im mittleren Bereich der Segmente sind zwar Reinigungswerkzeuge in Form von Schneiden angebracht, was aber bekanntlich nachteilig ist. Das abgescherte Erntegut gelangt unter die Abstreifer und kann im Bereich des Abstreiferträgers zu Verstopfungen führen. Bei den Abstreifern im Bereich der Ringe sind keinerlei Werkzeuge zum Reinigen der Abstreifer vorgesehen, was sich ebenfalls nachteilig auswirkt. Des Weiteren ist bei dieser Ausführung keine Lösung vorhanden, die abgeschertes Erntegut aus dem Trommelbereich unter dem Abstreifer- Kamm ausfördert. Dieser Bereich könnte somit mit Erntegut verstopfen. Ein gewisser Anteil Erntegut und Halme wird sich durch den Spalt der zwischen Abstreiferspitze und Trommel ist, durchziehen. Die langen Erntehalme können sich um den Halter der Abstreifer legen, wobei die Enden der angesammelten Erntehalme bis in die Spalten zwischen den Abstreifern ragen. Ein Ende der langen Halme ragt an einer Seite der Abstreifer- Halter durch einen Spalt zwischen den Abstreifern bis ins Futterschwad hinein. Das andere Ende der Halme ragt auf der anderen Seite der Abstreifer- Halter durch den benachbarten Spalt ebenfalls bis ins Futterschwad hinein. Die langen Halme werden nun von den nachgelagerten Pressorganen erfasst und in Richtung Schneidmulde gezogen. Somit können die Futterhalme nicht nach unten ausfallen, da sie oben gehalten werden. Auch etwaige Räumwerkzeuge, die an der Zinkentrommel angebracht sind, können diesen Bereich nicht freiräumen, da es keinen Gegenhalt gibt.

In der US 3323196 wird ein Gutaufnehmer gezeigt, der aus einer Trommel mit einer Vielzahl von Öffnungen im Trommelmantel versehen ist. Die Öffnungen sind zwar am Umfang versetzt, jedoch in linearen Reihen quer zur Fahrtrichtung angeordnet. Bei der Aufnahme des Erntegutes entstehen durch die geradlinige Anordnung der Zinken Lastspitzen, was zu unruhigem Lauf der Aufnahme führt. In der Trommel werden U-Schienen angeschweißt, in die die Zinken beziehungsweise die elastischen Zinkenaufnahmen eingesetzt werden. Die Schienen werden dann mit dem inneren Trommelmantel verschweißt. Beim Anbringen der Schienen müssen diese fest an den Innenmantel der Trommel angedrückt werden, damit die elastischen Zinkenaufnahmen die Öffnungen spaltfrei verschließen. Weiterhin nachteilig ist, dass ein Auswechseln von einzelnen Zinken nicht möglich ist. Außerdem dürfte es nur sehr schwer sein, bei breiten Aufnahmetrommeln die Schienen in der Mitte der Trommel zu befestigen. Das Anbringen und Lösen der Schweißnaht in der Trommelmitte ist als nicht machbar anzusehen. Da die Trommel an den Enden mit Platten oder Ronden versehen ist, an denen die Antriebszapfen angebracht sind, ist ein nachträgliches Entfernen der Schienen nicht mehr möglich. Es sei denn, dass diese Elemente schraubbar sind, was die Herstellkosten wiederum erhöht. Ein weiterer Nachteil ist, dass die Zinken radial durch die Trommelöffnungen ragen. Das Ablösen von Fördergut im Bereich der Abstreifer wird dadurch erheblich erschwert. Reinigungsmöglichkeiten für die Abstreifer sind nicht vorgesehen.

Die Aufgabe der Erfindung ist es, eine neuartige Aufnahmevorrichtung anzugeben, bei der Aufnahmezinken einfach mit wenig Aufwand an der Trommel montiert werden können. Ergänzend kann eine Möglichkeit geschaffen werden, die kurzen Abstreifer die das Fördergut an das nachfolgende Aggregat übergeben, an den Spitzen zu reinigen und den Förderprozess zu unterstützen. Es wird weiterhin vorgeschlagen, einen Förderspalt hinter der Trommel zu schaffen, wo eingezogenes Erntegut ausgefördert werden kann.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung geht aus von einer Aufnahmevorrichtung für eine Erntemaschine, die mit einer quer zur Aufnahmerichtung angeordneten, während der Aufnahme von Erntegut rotierenden Trommel ausgestattet ist, wobei die Trommel mit einer Anordnung nicht steuerbarer Aufnahmezinken besetzt ist, die am Boden liegendes Erntegut aufnehmen und an eine nachgeordnete Vorrichtung übergeben, wozu in der Mantelfläche der Trommel Öffnungen angeordnet sind, in die jeweils Aufnahmezinken einsetzbar sind. Eine derartige gattungsgemäße Aufnahmevorrichtung wird dadurch in erfindungsgemäßer Weise weiter entwickelt, dass in die fensterartige Öffnung eine Zinkentasche einsetzbar und an der fensterartigen Öffnung formschlüssig festlegbar ist, wobei mindestens ein Aufnahmezinken mit seinen sockelartigen Endbereichen in die Zinkentasche einsetzbar und mittels je einer den sockelartigen Endbereich der Aufnahmezinke und/oder die Zinkentasche und die Trommel zumindest abschnittsweise übergreifenden Druckplatte so an der Trommel festlegbar ist, dass die Zinkentasche relativ zu der fensterartigen Öffnung in der Mantelfläche der Trommel und die sockelartigen Endbereiche der Aufnahmezinken relativ zu der Zinkentasche kraftschlüssig verspannt festgelegt sind. Hierdurch ist es möglich, die Aufnahmezinken spielfrei und einfach austauschbar an der Trommel zu lagern, ohne aufwändige Halterungen an der Trommel vorsehen und mit der Trommel z.B. durch Schweißen verbinden zu müssen, wodurch hohe Herstellkosten entstehen. Die Zinkentaschen können durch eine formschlüssige Festlegung einfach im Bereich der fensterartigen Öffnungen der Trommel an der Trommel positioniert und vorläufig festgelegt werden, etwa indem passende Formgebungen an der Zinkentasche über die Ränder der fensterartigen Öffnung gesteckt werden und eine Art Verrastung mit den Rändern der fensterartigen Öffnung bilden. Anschließend wird der sockelartig Endbereich der Aufnahmezinken in die derart vorpositionierte Zinkentasche eingesetzt und mittels Druckplatte und einer kraftschlüssigen Verbindung mit der Zinkentasche an der Zinkentasche gehaltert. Dabei wird der sockelartig Endbereich der Aufnahmezinken zwischen Zinkentasche und Druckplatte verspannt und gleichzeitig die Zinkentasche in ihrer Position relativ zu der fensterartigen Öffnung durch die Druckplatte verspannt. Die Druckplatte hat hierbei die zweifache Aufgabe einmal zur Festlegung des sockelartigen Endbereichs der Aufnahmezinken an der Zinkentasche und zum anderen der Sicherung der Zinkentasche in ihrer vorpositionierten Lage an der Trommel im Bereich der fensterartigen Öffnung. Somit klemmt die Druckplatte sowohl die Zinkentasche als auch den Endbereich der Aufnahmezinken mittels einer kraftschlüssigen und z.B. für Reparaturen leicht wieder aufhebbaren kraftschlüssigen Verbindung. Damit lassen sich zu Wartungszwecken oder für den Austausch beschädigter Aufnahmezinken die Aufnahmezinken und die Zinkentaschen leicht demontieren und ersetzen. Zudem sind die Endbereiche der Aufnahmezinken und damit die Aufnahmezinken insgesamt in definierter Weise verspannt an der Trommel festgelegt, z.B. mit einer definierten Vorspannung, die bei auch stoßartigen Belastungen der Aufnahmezinken etwa durch Widerstand im Bodenbereich beim Betrieb der Aufnahmevorrichtung ein Lockern der Aufnahmezinken sicher verhindert.

Hierbei ist es denkbar, dass der sockelartige Endbereich der Aufnahmezinken und der zugehörigen Zinkentasche an der Trommel durch eine Verschraubung der Druckplatte kraftschlüssig verspannt an der Trommel festgelegt wird, indem der sockelartige Endbereich der Aufnahmezinken in der Zinkentasche und die Zinkentasche an der Trommel kraftschlüssig geklemmt und die Druckplatte an den Außenumfang der Trommel gedrückt ist. Die Druckplatte stützt sich dabei auf der Trommelaußenfläche ab und klemmt dabei den sockelartige Endbereich der Aufnahmezinken zusammen mit der Zinkentasche ein. Hierfür kann in weiterer Ausgestaltung im Bereich des Bodens der Zinkentasche mindestens ein Gewindeabschnitt angeordnet sein, in den mindestens eine Klemmschraube von oberhalb der Druckplatte eingeschraubt wird, die die Zinkentasche, den sockelartigen Endbereich der Aufnahmezinken und die Druckplatte im Bereich der fensterartigen Öffnung an der Trommel klemmend festlegt. Die Schraube kann einfach gelöst und die Baugruppe aus Aufnahmezinken, Druckplatte und Zinkentasche demontiert und bei Bedarf ersetzt werden.

Für die Positionierung und formschlüssige Festlegung der Zinkentaschen im Bereich der fensterartigen Öffnungen der Trommel ist es von Vorteil, wenn die einen vertieften Aufnahmeraum für den sockelartigen Endbereich der Aufnahmezinken aufweisende Zinkentasche zumindest abschnittsweise kragenartig ausgebildete, vom Rand der Zinkentasche nach außen abstehende Nocken aufweist. Diese Nocken stehen seitlich über die Umrisse der Zinkentasche hinweg ab und dienen zur bajonettartigen Wechselwirkung mit den Rändern der fensterartigen Öffnung, die z.B. mittels Laser oder dgl. in die Umfangsfläche der Trommel eingearbeitet worden sein können. So können z.B. die nach außen abstehenden Nocken der Zinkentasche in Tiefenrichtung der Zinkentasche von der Unterfläche der Zinkentasche derart unterschiedlich beabstandet sein, dass einander zugeordnete Nocken, den Rand der fensterartigen Öffnung in der Mantelfläche der Trommel abschnittsweise zwischen sich aufnehmend, auf den Rand der fensterartigen Öffnung aufsteckbar sind. Anschaulich gesprochen werden auf gegenüberliegenden Seiten der Zinkentasche zwei unterschiedlich hohe und dadurch übereinander angeordnete Nocken vorgesehen, die clipsartig auf den Rand der fensterartigen Öffnung aufgesteckt werden können und diesen Rand der fensterartigen Öffnung zwischen sich aufnehmen. Dabei kommen erste nach außen abstehende Nocken der Zinkentasche nach dem Aufstecken der Zinkentasche auf die Ränder der fensterartigen Öffnung auf der Außenfläche der Trommel zu liegen, während zweite nach außen abstehenden Nocken der Zinkentasche an der Innenfläche der Trommel liegen. Hierdurch ist eine einseitige Vorpositionierung der Zinkentasche an einem Rand der fensterartigen Öffnung realisierbar. Wichtig ist in diesem Zusammenhang zur endgültigen Positionierung der Zinkentasche, dass die Form und Außenabmessungen von Zinkentasche und von der Zinkentasche nach außen abstehenden Nocken sowie die Form und die Maße der fensterartigen Öffnung in der Mantelfläche der Trommel derart aufeinander abgestimmt sind, dass die Zinkentasche im Wesentlichen radial in die Zinkentasche einsteckbar und anschließend in der fensterartigen Öffnung in Umfangsrichtung des Trommelmantels um einen festlegbaren Betrag verschiebbar ist. Hierzu weist z.B. die Öffnung in der Mantelfläche der Trommel eine derartige Formgebung etwa in Form eines Montagefensters auf, dass die Zinkentasche nach dem radialen Verschieben in der fensterartigen Öffnung an dem Rand der Öffnung formschlüssig festgelegt werden kann. Anschaulich gesprochen wird die Zinkentasche wie vorstehend beschrieben zuerst auf einen Rand der fensterartigen Öffnung clipsartig aufgesteckt und in das Innere der Trommel gedrückt, bis auch die am gegenüberliegenden Rand angeordneten Nocken auf Höhe des Mantels der Trommel im Bereich der fensterartigen Öffnung zu liegen kommen. Dann kann die Zinkentasche parallel zum Umfang der Trommel in Richtung auf den anderen Rand der fensterartigen Öffnung geschoben werden, so dass auch die dort angeordneten, unterschiedlich hohen Nocken den Rand der fensterartigen Öffnung zwischen sich aufnehmen und die nach außen abstehenden ersten und zweiten Nocken der in die fensterartige Öffnung eingesetzten Zinkentasche in Umfangsrichtung des Trommelmantels beidseitig den Rand der Öffnung der Trommel abschnittsweise umgreifen und den Rand der Öffnung der Trommel zwischen sich aufnehmen. Damit ist die Zinkentasche quasi formschlüssig mit Hilfe der Nocken an dem Rand der fensterartigen Öffnung vorpositioniert in ihrer Montageposition gehaltert und kann mittels Druckplatte und zusammen mit den Aufnahmezinken wie vorstehend beschrieben kraftschlüssig an der Trommel festgelegt werden.

Die Aufnahmevorrichtung weist üblicherweise eine sog. Pick-up aus einer Trommel mit seitlich angebrachten Lagerblechen auf, sowie ein Tastradfahrwerk, welches mit einer zusätzlichen breiten Tastrolle hinter der Aufnahmevorrichtung versehen ist. Mittlerweile ist diese Technik soweit optimiert, dass es im laufenden Betrieb nicht mehr zu Kontakt zwischen Pick-up und Boden kommt. Diese Tastradfahrwerke sind grundsätzlich bekannt und gehören zum Stand der Technik und werden deshalb nicht weiter erläutert.

Die Trommel der Aufnahmevorrichtung kann aus einem einstückigen Rohr, mehreren zusammengeschweißten oder zusammen geschraubten Rohrabschnitten hergestellt sein. Denkbar ist auch, die Trommel aus einem oder mehreren Blechen zu walzen, in die die fensterartigen Öffnungen zur Festlegung der Aufnahmezinken vor dem Walzen mit einem Laser eingebracht werden. Es macht Sinn, die Abfallstücke der Öffnungen mit einer Perforation zu versehen und zunächst in der Blechtafel zu belassen. Nach dem Walzen werden die perforierten Fenster mit einem geeigneten Werkzeug ausgebrochen. Hierdurch wird verhindert, dass sich die schmalen Streifen zwischen den fensterartigen Öffnungen beim Walzen verwerfen. Es kann auch sinnvoll sein, wenn zwischen den einzelnen Rohrabschnitten Verstärkungsronden angebracht sind, die den Trommelmantel verstärken und den Rundlauf der Trommel sichern.

An den Enden der Trommel der Aufnahmevorrichtung werden Ronden eingeschweißt, in denen die Antriebs- und Lagerstummel für die Trommel befestigt werden. Die Stummel können eingeschweißt sein, es ist aber auch eine geschraubte Lösung denkbar. Die Ronden sollten in jedem Fall an dem äußeren Durchmesser mit Ablauföffnungen versehen sein, aus denen etwaige Flüssigkeit, die in die Trommel eingetreten ist, wieder entweichen kann. Diese Öffnungen sind z.B. in Form eines halben Langloches oder einer ähnlichen Geometrie vor dem Verschweißen der Ronden durch z.B. Lasern zu fertigen.

Die Aufnahmezinken können in erfindungsgemäßer Weise z.B. in geraden Reihen im Trommelmantel angebracht sein. Vorteilhaft ist es aber, entweder versetzte Aufnahmegruppen zu bilden oder die Aufnahmezinken in gleichmäßigen Winkelabständen versetzt in mehreren Reihen z.B. helixförmig gewendelt anzubringen. Die Belastung, die durch die Aufnahme- und Förderarbeit entsteht, wird dadurch reduziert. Durch eine günstige Zinkenanordnung wird das Schwad zusätzlich entzerrt und von der Mitte nach außen auf eine gleichmäßige Schwadstärke gebracht.

Zur einfachen Montage der Aufnahmezinken wird vorgeschlagen, diese in eine gehäuseartige Zinkentasche einzulegen und am Trommelmantel bzw. in den Öffnungen einzuspannen. Die benötigten Bauteile können in Form einer Zinkentasche und Druckplatte maschinell aus Blechen gefertigt werden und sind somit preiswert.

Im Trommelmantel sind die fensterartigen Öffnungen so gestaltet, dass zunächst eine Zinkentasche bei der Montage schräg an der langen geraden Seite der fensterartigen Öffnung angesetzt und mit unterschiedlich vorstehenden Nocken über diesen Rand der fensterartigen Öffnung geschoben wird. Wenn die Zinkentasche nach diesem einseitigen Aufschieben an einer der Seiten der fensterartigen Öffnung anliegt, kann die Zinkentasche ins Innere der Trommel in Richtung Trommelachse gedrückt werden, bis die äußeren Nocken der Zinkentasche auf der äußeren Mantelfläche aufliegen. Dies ist möglich, da an den Öffnungen im Trommelmantel an der gegenüberliegenden Seite der Zinkentasche Montageöffnungen vorhanden sind, durch die die untere lange Nocke der Zinkentasche ins Innere der Trommel hindurchgeschoben werden kann. Nun muss die Zinkentasche entgegen der vorherigen Aufsteckrichtung, vorteilhafter Weise entgegen der Trommeldrehrichtung, soweit verschoben werden, bis die Zinkentasche mit ihrer Außenkante an der Seite mit der Montageöffnung anliegt. Hierbei greifen gleichzeitig alle oberen Nocken der Zinkentasche über die äußere Mantelfläche der Trommel und alle unteren Nocken der Zinkentasche unter die innere Mantelfläche, sie liegen also am Innendurchmesser der Trommel an. Die Zinkentasche hat dadurch ihre formschlüssig quasi verrastete Arbeitsposition erreicht.

Als nächstes wird der Aufnahmezinken in die Zinkentasche eingelegt. Dies ist möglich, da Spiel zwischen sockelartigen Endbereichen der Aufnahmezinken und Zinkentasche vorgesehen ist. Danach wird die Druckplatte auf den Aufnahmezinken aufgelegt bzw. über die Aufnahmezinken gestülpt. Zwischen Druckplatte und Trommelmantel ist ebenfalls Spiel vorhanden, da der sockelartige Endbereich der Aufnahmezinken etwas höher ist als der Abstand zwischen der äußeren Mantelfläche und der Innenfläche der Zinkentasche. Beim Verspannen der Bauteile mittels eines Verbindungsgliedes wird der sockelartige Endbereich der Aufnahmezinken in die Zinkentasche eingepresst. Die Druckplatte legt sich beim Verspannen der Bauteile auf die äußere Mantelfläche auf. Die unteren, an der Innenfläche der Trommel anliegenden Nocken der Zinkentasche werden gegen die innere Mantelfläche der Trommel gezogen und dadurch kraftschlüssig fixiert. Da die oberen Nocken der Zinkentasche vorteilhafter Weise in den Ausnehmungen der Druckplatte hineinragen können, hat man gleichzeitig eine Fixierung der Zinkenbefestigung. Ein Verdrehen der Bauteile während des Einsatzes der Aufnahmevorrichtung und der Montage ist somit ausgeschlossen. Es kann sinnvoll sein, eine Abstandsbuchse oder eine anderweitige Begrenzung zwischen dem sockelartigen Endbereich der Aufnahmezinken und der Druckplatte zu montieren, um eine genau definierte Vorspannung der sockelartigen Endbereiche der Aufnahmezinken zu erreichen. Bei entsprechend großer Bohrung im sockelartigen Endbereich der Aufnahmezinken lässt sich eine solche Buchse problemlos montieren.

Vorteilhaft ist es, wenn ein Aufnahmezinken aus einem Sockel mit zwei Schenkeln besteht. Die Schenkel sind in einem Winkel von ca. 10° schräg angebracht, damit beim Herausziehen der Schenkel aus dem Förderbereich immer annähernd ein Winkel von ca. 90° zwischen Abstreifer und der Schenkel eingehalten wird, damit die Aufnahmezinken kein Erntegut unter die Abstreifer einziehen. Mittig im Zinkensockel kann eine Durchgangsbohrung für das kraftschlüssige Verbindungsmittel wie etwa eine Klemmschraube vorgesehen sein.

Denkbar ist es aber auch, jeden Schenkel der Förderzinken mit einem eigenen Sockel auszuführen. Man hätte die doppelte Anzahl Förderzinken, die aber einfacher herzustellen sind. Die Zinkentaschen könnten ähnlich ausgeführt sein wie bei den Aufnahmezinken mit zwei Schenkeln. Die Aufnahme für die sockelartigen Endbereiche der einschenkeligen Aufnahmezinken kann bei dieser Lösung in die Druckplatte integriert sein. Die Druckplatte hat dabei einen nach unten erweiterten Schaft, in dem zwei Ausnehmungen für die Endbereiche der Aufnahmezinken eingelassen sind. Es ist von Vorteil, wenn die Abmessungen der Ausnehmungen und die sockelartigen Endbereiche der Aufnahmezinken so bemessen sind, dass diese leicht klemmend ineinandergreifen. Somit werden bei der Montage zunächst die einschenkeligen Aufnahmezinken von unten in die Druckplatte eingeschoben und können bei der Montage nicht herausfallen. Anschließend wird die vormontierte Druckplatte mit den vorteilhafter Weise zwei Aufnahmezinken in eine entsprechend angepasste Zinkentasche eingelegt und verschraubt. Der nach unten erweiterte Schaft an der Druckplatte legt sich dabei in die Zinkentasche. Die Abmessungen können so ausgelegt werden, dass vor dem Anziehen des kraftschlüssigen Verbindungsmittels wie etwa einer Schraube zunächst ein kleiner Spalt zwischen dem erweiterten Schaft der Druckplatte und der Zinkentasche vorhanden ist. Die sockelartigen Endbereiche der Aufnahmezinken stehen etwas über den Randbereich des Schaftes der Druckplatte hervor. Beim Anziehen des kraftschlüssigen Verbindungsmittels werden die Sockel der Aufnahmezinken somit fest in dem Schaft der Druckplatte verspannt. Auch bei dieser Zinkenbefestigung legt sich die Druckplatte beim Verschrauben auf den äußeren Trommelmantel auf. Die Fixierung und Positionierung erfolgt über die Nocken der Zinkentaschen und die Ausnehmungen in der Druckplatte. Diese Art der Druckplatte könnte vorzugsweise aus einem Kunststoffteil im Spritzgussverfahren hergestellt werden.

Entsprechende Verstärkungsrippen können die Druckplatte verstärken, wodurch die Materialstärken reduziert werden können. Das Gesamtgewicht der Aufnahme der Aufnahmezinken würde damit gesenkt werden.

Auch ist denkbar, die Schenkel der Aufnahmezinken gerade aus dem Sockel auslaufen zu lassen. Dies ist sowohl bei den Aufnahmezinken mit einem Schenkel, als auch bei denen mit zwei Schenkeln möglich. Der Sockel bei den Aufnahmezinken mit einem Schenkel könnte dabei kreisrund gestaltet werden. Bei beiden Ausführungsformen würden die Zinkentaschen dann schräg, um ca. 10° geneigt in die Öffnungen der Trommel eingesetzt werden. Die Druckplatte ist bei diesen Lösungen so angepasst, dass die sockelartigen Endbereiche der Aufnahmezinken eingespannt werden, die Druckplatte sich auf der äußeren Mantelfläche auflegt und der Abstand der Druckplatte zur Spitze der Abstreifer immer gleich ist.

Ein großer Vorteil dieser Zinkenbefestigung ist das Einspannen der sockelartigen Endbereiche der Aufnahmezinken. Hierdurch können diese deutlich kürzer gestaltet werden, womit der Nachhaltigkeit der Lösung Genüge getan wird. Ein Ausreißen der sockelartigen Endbereiche der Aufnahmezinken aus den Zinkentaschen ist somit nicht möglich. Bei der Ausführung der Aufnahmezinken mit etwa kreisrundem Querschnitt mit je einem Sockel hat man den Vorteil, dass bei Verschleiß an den Zinkenspitzen, der sich durch Bodenkontakt ergibt, die Aufnahmezinken um 180° um ihre Achse in der Aufnahme gedreht werden können. Man hat somit die doppelte Standzeit der Aufnahmezinken, wodurch die Betriebskosten der Erntegutaufnahme deutlich gesenkt werden können. Ein weiterer Vorteil ist, dass die Zinkentaschen fest am Trommelmantel und spielfrei verspannt sind. Ein spielbehaftetes Klappern von Bauteilen würde Verschleiß bedeuten und ist somit bei dieser Konstruktion prinzipbedingt ausgeschlossen. Ebenso ist es bei der erfindungsgemäßen Gestaltung von Vorteil, dass der Trommelmantel durch das Festklemmen der Zinkentaschen verstärkt wird. Dies ist natürlich von den Abmessungen und der Materialstärke der Bauteile abhängig.

Durch die mit einem Laser bzw. Rohrlaser eingebrachten fensterartigen Öffnungen kann die Trommel absolut maßhaltig gefertigt werden. Ein Schweißverzug (Längen- Schrumpfung) bei der Trommelherstellung entsteht nicht, da nur an den Enden der Trommel geschweißt wird.

Ein weiterer Vorteil der erfindungsgemäßen Gestaltung liegt darin, dass der sich drehende Trommelmantel die Förderwirkung unterstützt, da im Bereich, in dem das Schwad aufgenommen wird, keine umlaufenden Abstreifer vorhanden sind, die den Fluss des Ernteguts erheblich hemmen.

Im hinteren Bereich der Aufnahmevorrichtung ist zwischen den Lagerblechen ein Abstreifkamm verschraubt. Die Position ist so gewählt, dass dieser Abstreifkamm unterhalb des Flusses des Ernteguts liegt. Der Abstreifkamm sollte ausreichend dimensioniert sein, da die nachgelagerten Pressorgane unmittelbar Druck auf den Abstreifkamm und die darauf befestigten Abstreifer ausüben. Darum ist es wichtig, dass dieser Abstreifkamm einerseits großvolumig ausgelegt ist, andererseits aber noch genügend Freiraum zur Trommel verbleibt. Wichtig ist auch, dass der Öffnungswinkel zwischen Trommel und Abstreifkamm groß genug und vor allem nach unten gesehen größer wird, damit das Erntegut, was durch die oberhalb der Aufnahmetrommel gelagerten Pressorgane auf die Aufnahmevorrichtung geschleudert wird und zwischen die Abstreifer gelangt, nach unten ausfallen kann bzw. durch entsprechende Werkzeuge ausgeräumt wird.

Darum sieht die Erfindung in weiterer Ausgestaltung vor, zusätzlich vorteilhaft kammartig ausgebildete Förderelemente an den Druckplatten zu integrieren. Bei jedem Durchlaufen der Schenkel der Aufnahmezinken durch die Zwischenräume der Abstreifer wird zunächst das Erntegut oberhalb der Abstreifer weitergefördert. Im Bereich der Abstreiferspitzen kann sich aber leicht dort störendes Erntegut ansammeln. Dies wird nun von den nachfolgenden Förderelementen mitgenommen und weitergefördert. Gleichzeitig werden die Abstreiferspitzen von sich unter Umständen festgesetztem Erntegut freigeräumt. Dies ist möglich, da die Winkel- und Dreieckform der Förderelemente und die der Abstreifer so aufeinander abgestimmt sind, dass beim Durchlaufen der Förderelemente an den Abstreiferspitzen immer ein kleiner Spalt zwischen diesen Bauteilen vorhanden ist. Die Abstreifer und deren Befestigung sind ausreichend dimensioniert, um den Druck standzuhalten. Selbst wenn sich durch die auftretende Belastung ein Abstreifer etwas nach unten biegen würde, kann es nicht zu einer Blockade kommen. Die Förderelemente sind z.B. schräg nach hinten in einem Winkel von etwa 45° an der Druckplatte ausgebildet, dass in einem derartigen Fall die Abstreiferspitze zunächst auf der Druckplatte aufsetzen würde. Im Einlaufbereich, in dem die Abstreiferspitze die Förderkämme berühren könnte, ist im Übergangsbereich von der Druckplatte zu den Förderelementen eine Vertiefung in Form eines Freischnittes angebracht. Außerdem ist die senkrechte Vorderseite der Abstreiferspitze durch die Einbaulage der Abstreifer immer nach hinten gerichtet. Man könnte diese Anordnung auch als nachlaufend bezeichnen, sodass die Unterseite der Abstreiferspitze in dem sich ergebenen Dreieck der Förderelemente die unteren Kanten der Abstreiferspitzen mit den oberen Kanten der Förderelemente berühren würden. Diese würden dann schabend aneinander hergleiten, was die Reinigung der Abstreiferspitzen aber sogar verbessert. Durch die genannte Anordnung der Bauteile ist sichergestellt, dass es bei einer denkbaren Verformung der Abstreifer nicht zu Ausfällen oder gar Bruch kommen kann Das freigeräumte Erntegut von den Spitzen der Abstreifer wird nun einerseits von den nachfolgenden Aufnahmezinken mit in Richtung Pressorgan gefördert, oder von den Förderelementen weiter mit über die Abstreifer nach hinten gefördert. Somit nehmen die Förderelemente am aktiven Förderprozess teil. Sind die Förderelemente unterhalb der Abstreifer, räumen sie den Freiraum zwischen Trommel und Abstreifkamm aus.

Es kann durchaus sinnvoll sein, nicht jede Druckplatte mit derartigen Förderelementen auszurüsten. Denkbar ist, jede zweite oder auch nur eine der hintereinander angeordneten Druckplatten, die Bestandteil der Zinkentaschen sind, mit Förderelementen zu versehen. Auch ist es denkbar, separate Förderelemente auf die Trommel aufzubringen.

Die Förderelemente sind hinter den Aufnahmezinken in einem Abstand von ca. 1/3 des Abstandes zweier Aufnahmezinken angebracht. Denkbar ist auch, die Druckplatten soweit zu verlängern, dass sich die Förderelemente in etwa zwischen zwei benachbarten Aufnahmezinken befinden. Somit gelangt mehr Erntegut auf die Förderelemente. Die Förderleistung der Aufnahmevorrichtung würde durch die Förderelemente zusätzlich unterstützt, was zu einer verbesserten Leistung führt.

Um Verstopfungen unter den Abstreifern zu vermeiden, kann es sinnvoll sein, einen Förderspalt hinter der Trommel zu schaffen, wo die Förderelemente das Erntegut im Falle einer Verstopfung ausräumen.

Für eine derartige Ausgestaltung der Bauteile wird vorgeschlagen, unter den Abstreifern Stützelemente so zu formen, dass diese bis an die Zinkentrommel ragen. Die Stützelemente erstrecken sich oben von einer Auflage, auf der die Abstreifer befestigt werden, bis relativ weit nach unten. Die Unterkante der Stützelemente reicht etwa bis zur Mitte des Abstreifer-Kammes und verläuft fast parallel zur oberen Kante. Die Vorderseite der Stützelemente sind kreisrund ausgearbeitet und an den Radius der Zinkentrommel angepasst. Zwischen Zinkentrommel und den Stützelementen entsteht somit ein kleiner Spalt, der als Förderspalt für eingezogenes Erntegut dient.

Schieben sich eingezogenes Erntegut oder lange Halme in den Förderspalt, werden diese sofort durch an die Zinkentrommel oder an den Druckplatten angebrachte Förderkämme mit nach unten gefördert. Der Förderspalt ist dabei so lang, dass auch lange Halme sich oben komplett aus den Spalten zwischen den Abstreifern herausziehen. Da nun die langen Halme und das Erntegut oben nicht mehr gehalten werden, können die Halme und das Erntegut frei nach unten ausfallen.

Der Förderspalt verläuft kreisrund, parallel zur Zinkentrommel. Es ist aber auch denkbar, dass der Spalt nach unten hin etwas breiter wird, damit die Erntehalme besser ausgefördert werden können. Die Reibung zwischen Zinkentrommel und der kreisrunden Vorderkante der Stützelemente würde dadurch minimiert.

Wichtig ist, dass im oberen Bereich unter den Abstreifern keine Stoßkante zum Abstreifer entsteht. Es wird daher vorgeschlagen, dass die Spitzen der Stützelemente bis in eine Mulde oder Bohrung, die in den Abstreifern eingebracht sind, hineinragen. Derartige Mulden lassen sich fertigungstechnisch durch Sicken herstellen.

Um Stauungen des Erntegutes im Bereich der Abstreifer, in dem sich die Schenkel der Aufnahmezinken bei der Rotation der Trommel unter die Abstreifer zurückziehen, zu vermeiden, kann es von Vorteilsein, dass sich die Zwischenräume der Abstreifer nach hinten hin öffnen. Das über die Abstreifer gleitende Erntegut, welches sich auch in die Zwischenräume der Abstreifer drückt, kann dann leichter ausgeschoben werden. Zur Verbreiterung der Zwischenräume wird vorgeschlagen, die Abstreifer nach hinten hin abzuschrägen. Diese würden dann konisch zulaufen.

Eine besonders bevorzugte Ausführungsform der erfindungsgemäßen Aufnahmevorrichtung zeigt die Zeichnung.

### Es zeigen:

- Figur 1-: eine Aufnahmevorrichtung in einer perspektivischen Ansicht,
- Figur 2-: zeigt einen Teil der Aufnahmevorrichtung in Vorderansicht,
- Fig. 2a-: zeigt eine Detailansicht von einer Abstreiferspitze und Förderkamm gemäß Fig. 2,
- Figur 3-: zeigt einen Schnitt A-A durch die Pick-up gemäß Fig. 2,
- Fig. 3a-: eine Ablauföffnung in Form eines Langloches gemäß Fig. 3, Figur 4-4e - die Montageschritte m1, m2, m3 der Zinkentaschen,
- Figur 5-: einen Trommelabschnitt mit Aufnahmezinken im eingebauten Zustand,
- Fig. 5a-: zeigt ein Zinkengehäuse als Explosionsansicht,
- Fig. 6-: zeigt einen Querschnitt eines montierten Zinkengehäuses,
- Fig. 7 -: den Spalt e zwischen Abstreifer und Förderkamm,
- Fig. 8 -: den Spalt s zwischen Unterkante Abstreiferspitze und Oberkante Förderkamm,
- Fig. 9 -: eine andere Ausgestaltung des Zinkengehäuses mit zwei Aufnahmezinken in einer gemeinsamen Zinkentasche,
- Fig. 9a -: eine Explosionsansicht des Zinkengehäuses gemäß Figur 9,
- Fig. 10-: einen Längsschnitt durch das Zinkengehäuse gemäß Figur 9,
- Fig. 11 -: einen Querschnitt durch die Befestigung der Zinken gemäß Figur 9,
- Fig. 12 -: zeigt die Stützelemente und den Förderspalt,
- Fig. 13 -: ist ein Schnitt A-A aus Fig. 12 und zeigt den Spalt zwischen Druckplatte und Stützelement.

Gleiche oder ähnliche Elemente können in den nachfolgenden Figuren mit gleichen oder ähnlichen Bezugszeichen versehen sein.

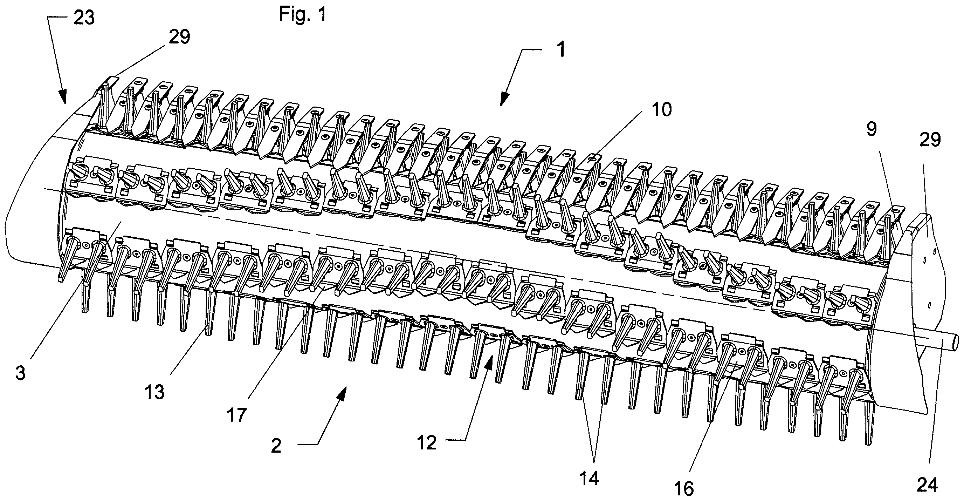

Fig.1 zeigt eine erfindungsgemäße Aufnahmevorrichtung 1, die zur Anbringung an eine nicht näher dargestellte Erntemaschine vorgesehen ist. Sie besteht im Wesentlichen aus einer Trommel 3, die mit Aufnahmezinken 13 versehen ist, einem Abstreifkamm 9, der mit Abstreifern 10 bestückt ist sowie stirnseitig der Trommel 3 angeordneten Lagerblechen 29, zwischen denen der Abstreifkamm 9 befestigt ist. Die Trommel 3 ist dabei an den Lagerblechen 29 drehbar gelagert und mit fensterartigen Öffnungen 7 in mehreren Reihen geradlinig, helixförmig oder in Gruppen versehen, in denen die Aufnahmezinken 13 mittels Zinkentaschen 12 eingebaut werden. Die Trommel 3 wird in den Lagerblechen 29 von dem Lagerstummel 23 und dem Antriebsstummel 24 getragen. Die Aufnahmezinken 13 bestehen dabei aus von der Trommel 3 abstehenden Schenkeln 14, die zur Aufnahme des Ernteguts dienen, und sockelartigen Endbereichen 15

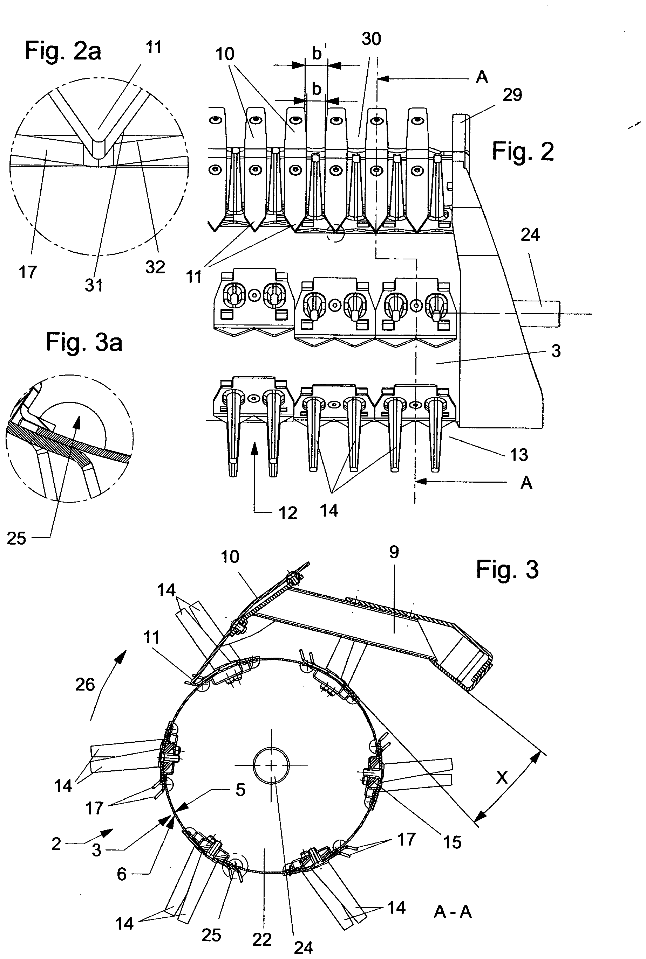

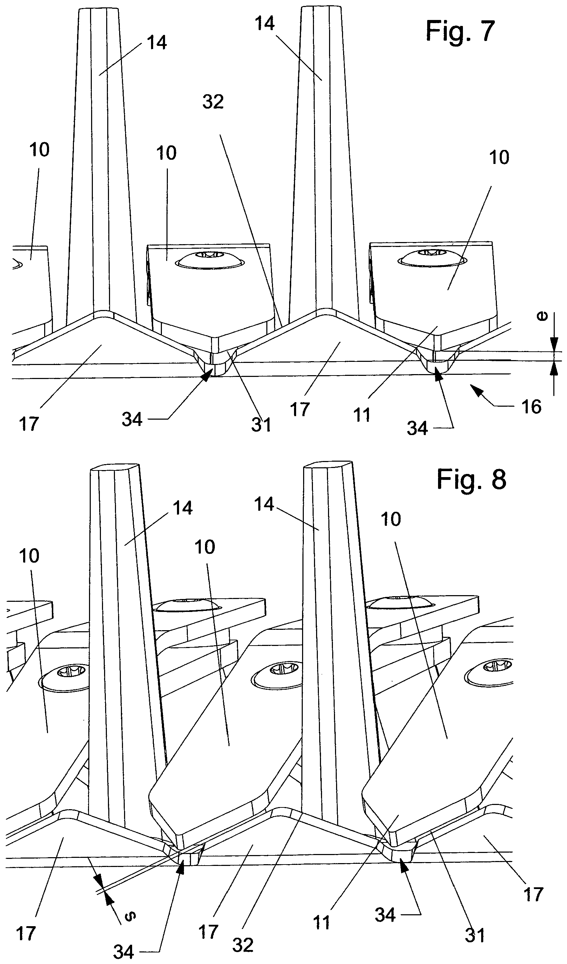

Fig.2 zeigt einen Teilbereich der Aufnahmevorrichtung 1. Im oberen Bereich der Figur 2 sind die Abstreifer 10 dargestellt, die in dem Bereich, in dem die Aufnahmezinken 13 sich aus den Förderbereich herausziehen, parallel verlaufen. Im Bereich hinter der Abkantung der Abstreifer 10 werden die Abstreifer 10 hingegen schmaler. Der Zwischenraum 30 zwischen zwei benachbarten Abstreifern 10 ändert sich im hinteren Bereich von einer Breite b auf die Breite b'. Dadurch kann das Erntegut frei nach hinten ausschieben. Die Abstreifer 10 laufen im vorderen Bereich spitz zu und bilden somit die Abstreiferspitze 11 mit den Unterkanten 31 an jeder Seite. Beim Durchlaufen der Förderelemente 17 wird die Abstreiferspitze 11 gereinigt. Unter starker Belastung kann es vorkommen, dass die Unterkanten 31 der Spitzen 11 die Oberkanten 32 der Förderelemente 17 berühren. Grundsätzlich ist aber ein gleichmäßiger Spalt s vorhanden, der in Fig. 8 ersichtlich ist.

Fig. 3 zeigt eine Pick-up 2 im Schnitt A-A gemäß Fig. 2. Hinter der Trommel 3 ist der Abstreifkamm 9 befestigt. Zwischen der Trommel 3 und dem Abstreifkamm 9 wird der Freiraum oder auch Öffnungswinkel x gezeigt. Dieser wird nach unten hin größer, damit das Erntegut von den Förderelementen 17 frei ausgeräumt werden kann. Die Trommel 3 ist mit Ronden 22 fest verbunden. Der Lagerstummel 23 sitzt zentrisch in der Ronde 22. Oberhalb des Abstreifkamms 9 sind die Abstreifer 10 befestigt. Diese laufen tangential nach vorne an die äußere Mantelfläche 6 der Trommel 3 mit einem Abstand aus, dass es nicht zu Berührungen der Bauteile kommen kann.

Fig. 3a zeigt eine Ablaufmöglichkeit für Flüssigkeit wie z.B. Wasser oder auch Beschichtungsmaterial, welches bei der Farbgebung in die Trommel 3 gewollt eintritt. Damit diese eingetretenen Medien aus der Trommel 3 entweichen können, sind beidseitig in den Ronden 22 mehrere Ablauföffnungen 25 am äußeren Umfang der Ronden 22 vorgesehen.

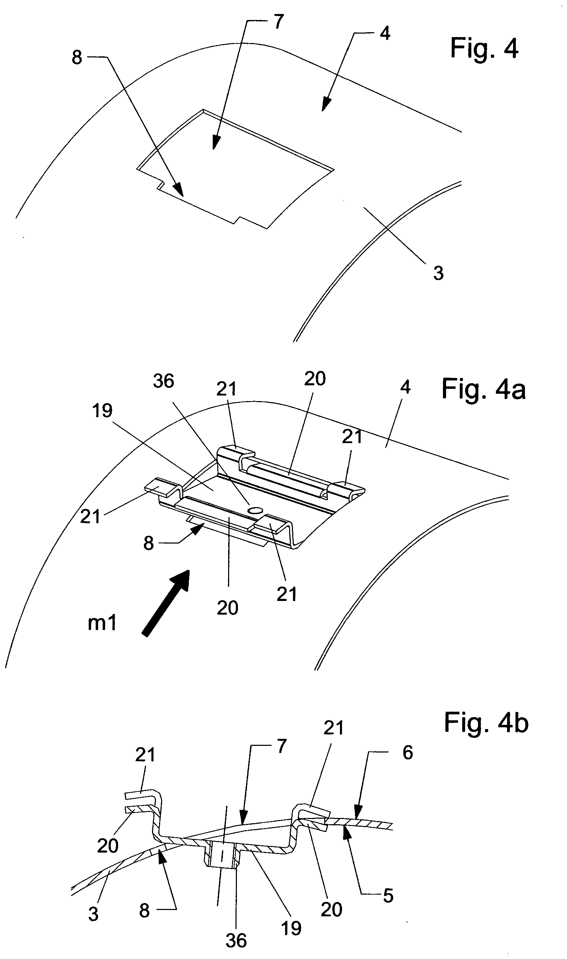

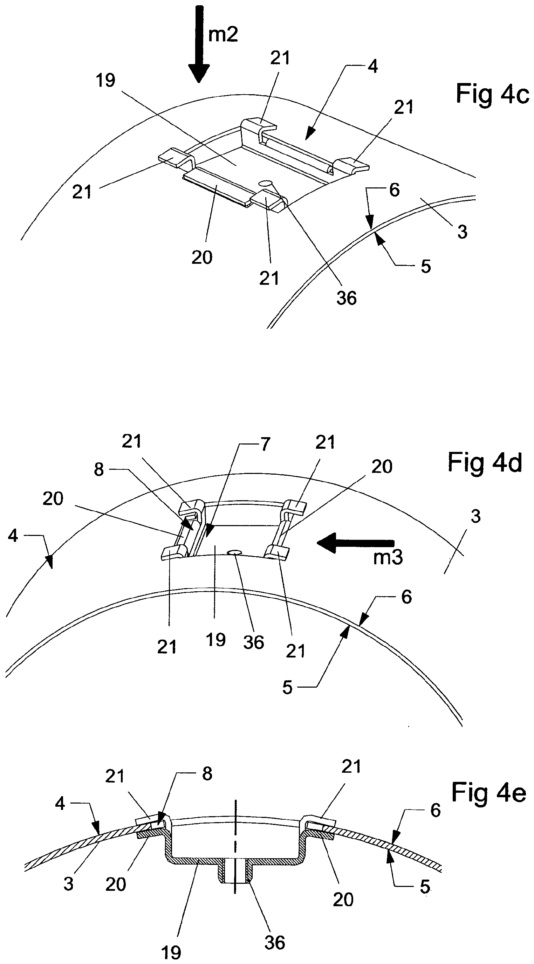

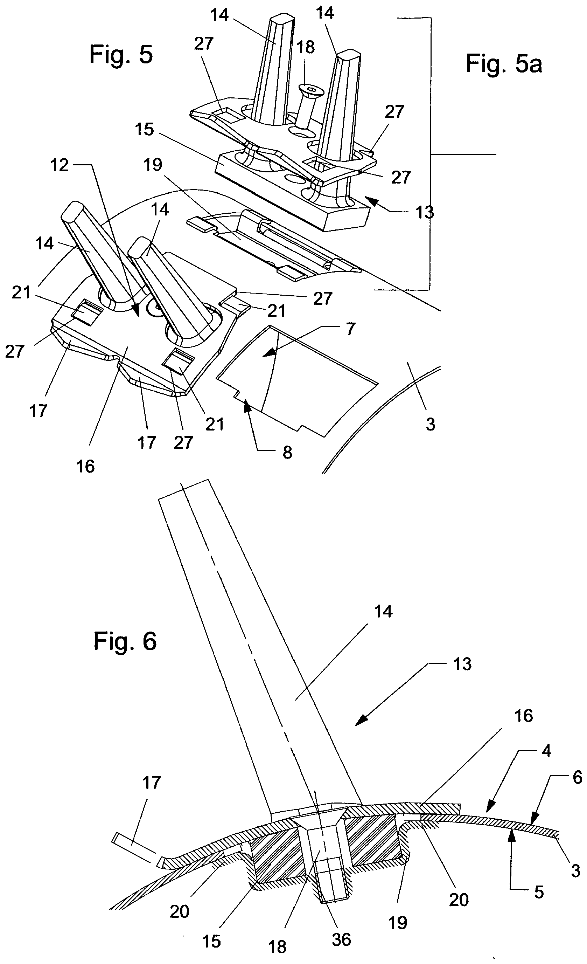

In den Fig. 4, 4a, 4b, 4c und 4e wird die Montage einer Zinkentasche 19 dargestellt. Diese wird als Kant- oder Pressteil aus einem Blechzuschnitt hergestellt. Die oberen Nocken 21 und unteren Nocken 20 werden bei der Fertigung angebogen. Die Form der Nocken 20, 21 ist mit dem Außen- und Innendurchmesser der Trommel 3 abgestimmt, was bedeutet, dass die Kantwinkel größer als 90° sind. Der Abstand von der unteren Nocke 20 zu den zwei oberen Nocken 21 entspricht in etwa der Blechstärke plus Beschichtungsstärke der Trommel 3. Die Breite der Zinkentaschen 19 ist geringfügig schmaler als die der fensterartigen Öffnungen 7 der Trommel 3. Mittig im Boden der Zinkentaschen 19 ist ein Gewinde 36 z.B. in Form einer Schweißmutter, Einziehmutter oder eines Gewindes, welches mit dem Fließbohrverfahren hergestellt ist, vorgesehen. Bei der Montage einer symmetrischen Zinkentasche 19 wird zunächst eine Seite, an der die Nocken 20, 21 angebracht sind, über den Rand der fensterartigen Öffnung 7 im Trommelmantel 4 gestülpt. Mit leichtem Druck in Förderrichtung 26 der Trommel 3, in Figur 4a mit m1 und nach unten in Richtung Trommelmitte in Fig. 4c mit m2 dargestellt, wird die Zinkentasche 19 eingesetzt. Möglich ist dies, da an den fensterartigen Öffnungen 7 eine schmale Montageöffnung 8 vorhanden ist. Durch diese etwas breitere Montageöffnung 8 kann die Nocke 20 in Richtung auf die Trommelmitte durchgeschoben werden. Im nächsten Schritt wird nun die Zinkentasche 19 entgegen der Trommeldrehrichtung 26 verschoben, bis der senkrechte Steg der Zinkentasche 19 am Rand der fensterartigen Öffnung 7 anliegt, was in Fig. 4d mit m3 dargestellt ist. Diese Endlage der Zinkentasche 19 ist auch in Fig. 4e und Fig. 6 ersichtlich. Die Materialstärke und Qualität der Zinkentaschen 19 ist so bemessen, dass die Nocken 20 und 21 die Belastung, die von den Aufnahmezinken 13 übertragen wird, aufnehmen kann.

Fig. 5 zeigt ein montiertes Zinkengehäuse 12 und mit Fig. 5a eine Explosionsansicht der zur Festlegung der Aufnahmezinken 13 benötigten Bauteile. Wie in Fig. 5 zu sehen ist, deckt die Druckplatte 16 die komplette Öffnung 7 und die Montageöffnung 8 nach der Montage der Aufnahmezinken 13 ab. Erntereste können somit nicht in das Innere der Trommel 3 gelangen. In den Ausnehmungen 27 der Druckplatte 16 liegen die oberen Nocken 21 der Zinkentasche 19. Somit sind alle Bauteile vom Zinkengehäuse 12 fixiert und in Ihrer Lage komplett bestimmt. Das Verklemmen des Zinkengehäuse 12 erfolgt beim Anziehen des hier schraubenartigen Verbindungsmittels 18. Die Unterseite der Druckplatte 16 legt sich dabei auf die äußere Mantelfläche 6 der Trommel 3 auf. Die Oberseite der unteren Nocken 20 legen sich dabei an die innere Mantelfläche 5 der Trommel 3 an, sprich Innendurchmesser der Trommel 3.

In Fig.6 ist ein Querschnitt eines montierten und verspannten Zinkengehäuses 12 auf dem Trommelmantel 4 in einer fensterartigen Öffnung 7 dargestellt. Nach dem Verspannen des Zinkengehäuses 12 hat sich der Zinkensockel 15 soweit ausgedehnt, dass er fast spielfrei in der Zinkentasche 19 sitzt.

In Fig. 7 wird der Abstand zwischen Druckplatte 16 und der Unterseite der Spitze 11 der Abstreifer 10, der mit e bezeichnet ist, dargestellt. Dieser Abstand e ist durch die Form der Förderelemente 17 immer größer als der Abstand s zwischen der Unterkante 31 der Abstreiferspitze 11 und Oberkante 32 der Förderelemente 17 in Fig. 8.

Im hinteren Bereich der Aufnahmevorrichtung 1 ist zwischen den Lagerblechen 29 ein Abstreifkamm 9 verschraubt. Die Position ist so gewählt, dass dieser Abstreifkamm 9 unterhalb des Flusses des Ernteguts liegt. Der Abstreifkamm 9 sollte ausreichend dimensioniert sein, da die nachgelagerten Pressorgane unmittelbar Druck auf den Abstreifkamm 9 und die darauf befestigten Abstreifer 10 ausüben. Darum ist es wichtig, dass dieser Abstreifkamm 9 einerseits großvolumig ausgelegt ist, andererseits aber noch genügend Freiraum zur Trommel 3 verbleibt. Wichtig ist auch, dass der Öffnungswinkel X zwischen Trommel 3 und Abstreifkamm 9 groß genug und vor allem nach unten gesehen größer wird, damit das Erntegut, was durch die oberhalb der Aufnahmetrommel 3 gelagerten Pressorgane auf die Aufnahmevorrichtung 1 geschleudert wird und zwischen die Abstreifer 10 gelangt, nach unten ausfallen kann bzw. durch entsprechende Werkzeuge ausgeräumt wird.

Darum sieht die Erfindung vor, zusätzlich etwa kammartig ausgebildete Förderelemente 17 an den Druckplatten 16 zu integrieren. Bei jedem Durchlaufen der Schenkel 14 der Aufnahmezinken 13 durch die Zwischenräume 30 der Abstreifer 10 wird zunächst das Erntegut oberhalb der Abstreifer 10 weitergefördert. Im Bereich der Abstreiferspitzen 11 kann sich aber leicht dort störendes Erntegut ansammeln. Dies wird nun von den nachfolgenden Förderelementen 17 mitgenommen und weitergefördert. Gleichzeitig werden die Abstreiferspitzen 11 von sich unter Umständen festgesetztem Erntegut freigeräumt. Dies ist möglich, da die Winkel- und Dreieckform der Förderelemente 17 und die der Abstreifer 10 so aufeinander abgestimmt sind, dass beim Durchlaufen der Förderelemente 17 an den Abstreiferspitzen 11 immer ein kleiner Spalt e zwischen diesen Bauteilen vorhanden ist. Die Abstreifer 10 und deren Befestigung sind ausreichend dimensioniert, um den Druck standzuhalten. Selbst wenn sich durch die auftretende Belastung ein Abstreifer 10 etwas nach unten biegen würde, kann es nicht zu einer Blockade kommen. Die Förderelemente 17 sind schräg nach hinten in einem Winkel von etwa 45° an der Druckplatte 16 ausgebildet, dass in einem derartigen Fall die Abstreiferspitze 11 zunächst auf der Druckplatte 16 aufsetzen würde. Im Einlaufbereich, in dem die Abstreiferspitze 11 die Förderelemente 17 berühren könnte, ist im Übergangsbereich von der Druckplatte 16 zu den Förderelementen 17 eine Vertiefung 34 in Form eines Freischnittes angebracht. Außerdem ist die senkrechte Vorderseite 31 der Abstreiferspitze 11 durch die Einbaulage der Abstreifer 10 immer nach hinten gerichtet. Man könnte diese Anordnung auch als nachlaufend bezeichnen, sodass die Unterseite der Abstreiferspitze 11 in dem sich ergebenen Dreieck der Förderelemente 17 die unteren Kanten 31 der Abstreiferspitzen 11 mit den oberen Kanten der Förderelemente 17 berühren würden. Diese würden dann schabend aneinander hergleiten, was die Reinigung der Abstreiferspitzen 11 aber sogar verbessert. Durch die genannte Anordnung der Bauteile ist sichergestellt, dass es bei einer denkbaren Verformung der Abstreifer 10 nicht zu Ausfällen oder gar Bruch kommen kann

Das freigeräumte Erntegut von den Abstreiferspitzen 11 wird nun einerseits von den nachfolgenden Aufnahmezinken 13 mit in Richtung Pressorgan gefördert, oder von den Förderelementen 17 weiter mit über die Abstreifer 10 nach hinten gefördert. Somit nehmen die Förderelemente 17 am aktiven Förderprozess teil. Sind die Förderelemente 17 unterhalb der Abstreifer 10, räumen sie den Freiraum zwischen Trommel 3 und Abstreifkamm 9 aus.

In Fig. 8 wird der Spalt s zwischen der Unterkante 31 der Abstreiferspitze 11 und Oberkante 32 der Förderelemente 17 gezeigt. Dieser Spalt s kann wie bereits beschrieben zu Null werden, wenn die Abstreiferspitzen 11 sich aufgrund von Belastungen nach unten biegen. Man hat dann eine schabende Wirkung zwischen den Bauteilen. Die Vertiefung 34 zwischen den Förderelementen 17 verhindert aber ein Blockieren der Trommel 3, da die Schrägen der Vertiefung 34 so ausgelegt sind, dass die Abstreiferspitze 11 beim Passieren der genannten Bauteile angehoben werden.

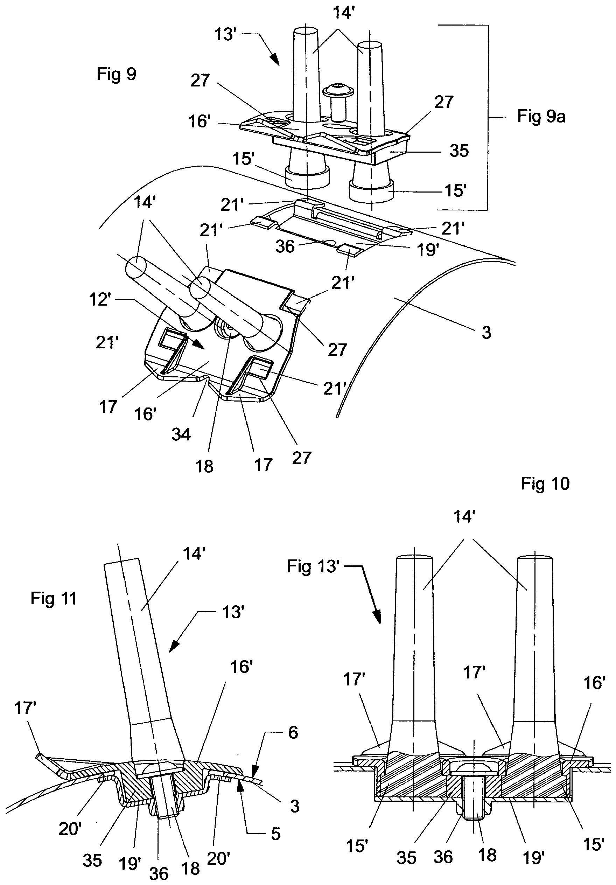

Figur 9 zeigt ein montiertes Zinkengehäuse 12' und in der Figur 9a eine Explosionsansicht der zur Festlegung der Aufnahmezinken 13' benötigten Bauteile. Wie in Figur 9 zu sehen ist, deckt auch bei dieser Lösung die Druckplatte 16' mit dem erweiterten Schaft 35 die komplette Öffnung 7 und die Montageöffnung 8 nach der Montage der Aufnahmezinken 13' ab. Emtereste können somit nicht in das Innere der Aufnahmetrommel 3 gelangen. In den Ausnehmungen 27 der Druckplatte 16' liegen die oberen Nocken 21' der Zinkentasche 19'. Somit sind alle Bauteile des Zinkengehäuses 12' fixiert und in ihrer Lage komplett bestimmt. Das Verklemmen des Zinkengehäuses 12' erfolgt beim Anziehen des Verbindungsmittels 18. Die Unterseite der unteren Nocken 20' legen sich dabei an die innere Mantelfläche 5 der Trommel 3 und damit an en Innendurchmesser der Trommel 3 an.

In Figur 10 wird ein Längsschnitt durch das montierte und verspannte Zinkengehäuse 12' gezeigt. Die sockelartigen Endbereiche 15' der Aufnahmezinken 13' sind vom erweiterten Schaft 35 der Druckplatte 16' umschlungen und somit fixiert und in ihrer Lage komplett bestimmt. Beim Anziehen der Druckplatte 16' mittels des kraftschlüssigen Verbindungsmittels 18 wird die Vorspannung der sockelartigen Endbereiche 15' der Aufnahmezinken 13' in dem erweiterten Schaft 35 der Druckplatte 16' erzeugt. Ein ungewolltes Verdrehen der Aufnahmezinken 13' ist somit ausgeschlossen.

In Figur 11 ist ein Querschnitt eines verspannten Zinkengehäuses 12' dargestellt. Die Druckplatte 16' und der erweiterte Schaft 35 sind bei dieser Lösung aus einem Stück gefertigt. Der erweiterte Schaft 35 der Druckplatte 16' legt sich beim Verspannen des Zinkengehäuses 12' auf die Innenfläche der Zinkentasche 19'. Zwischen den Flanken des erweiterten Schafts 35 der Druckplatte 16' und der senkrechten Flanken der Zinkentasche 19' ist bei dieser Lösung Luft vorhanden.

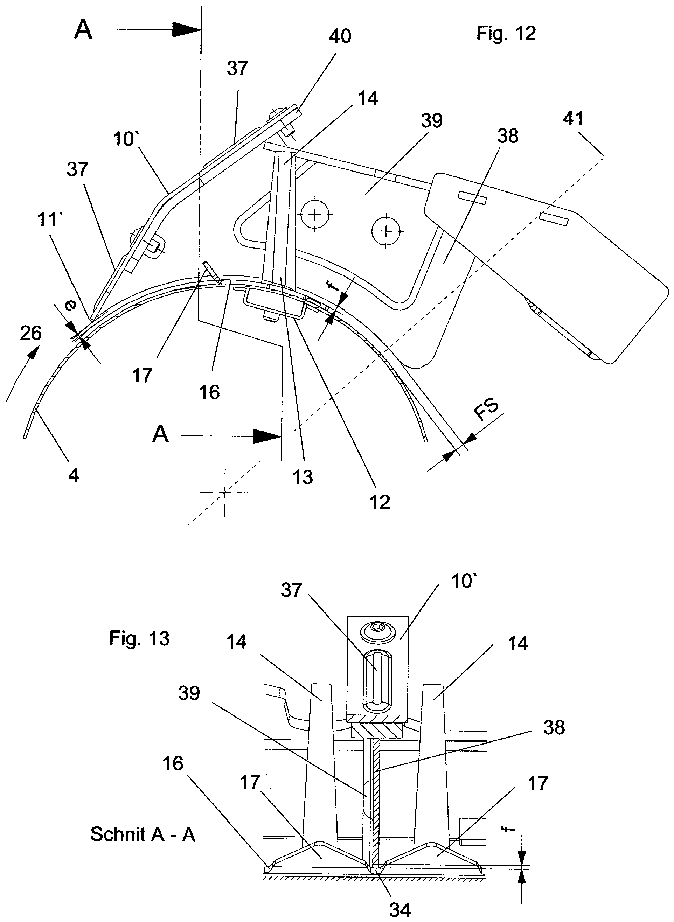

Figur 12 zeigt eine Seitenansicht mit dem Förderspalt FS, einen Teil vom Trommelmantel 4, den kurzen Abstreifer 10' mit der Spitze 11' der auf der Auflage 40 befestigt ist und einem Zinkengehäuse 12 mit montierten Aufnahmezinken 13. Wie ersichtlich ist, verläuft in dieser Darstellung der Förderspalt FS kreisrund und im gleichen Abstand zum Trommelmantel 4 der Trommel 3. Wie bereits erwähnt, kann sich der Förderspalt FS von oben nach unten hin gleichmäßig öffnen. Man könnte den Förderspalt FS dann auch als konisch nach unten geöffnet bezeichnen. Diese Ausführungsvariante würde das Ausfördern von Erntegut begünstigen. Beim Durchlaufen der Förderelemente 17 durch den Förderspalt FS ist der Abstand f größer als der Spalt e der zwischen der Spitze 11'des Abstreifers 10'und einer Druckplatte 16. Somit ist sichergestellt, dass es nicht zu Berührung der Spitze 1 1'mit der Druckplatte 16, kommt. Der Spalt e sollte möglichst gering sein, damit sich wenig Erntegut unter die Spitze 11' der Abstreifer 10'durchschieben kann.

Der Förderspalt FS erstreckt sich von der Spitze 11'der Abstreifer 10' bis über die Trommelmitte 41, die als gedachte Linie dargestellt ist.

Figur 13 ist der Schnitt A - A aus Figur 12. Hier wird nochmals der Spalt f dargestellt. Die Förderelemente 17 verlaufen links und rechts vom Stützelement 38 und nehmen abgelagertes Erntegut, welches sich in den Förderspalt FS eingeschoben hat mit nach unten, und verhindern somit, dass sich die Erntehalme unterhalb der Abstreifer 10'festsetzen.

### Sachnummernliste

- 1 -: Aufnahmevorrichtung
- 2 -: Pick-up
- 3 -: Trommel
- 4 -: Trommelmantel
- 5 -: innere Mantelfläche
- 6 -: äußere Mantelfläche
- 7 -: fensterartige Öffnung
- 8 -: Montageöffnung
- 9 -: Abstreifkamm
- 10,10' -: Abstreifer
- 11,11' -: Spitze
- 12, 12'-: Zinkengehäuse
- 13, 13'-: Aufnahmezinken
- 14, 14'-: Schenkel
- 15, 15'-: sockelartiger Endbereich Aufnahmezinken
- 16, 16'-: Druckplatte
- 17 -: Förderelement
- 18 -: kraftschlüssiges Verbindungsmittel Schraube
- 19, 19'-: Zinkentasche
- 20, 20'-: untere Nocken
- 21, 21'-: obere Nocken
- 22 -: Ronden
- 23 -: Lagerstummel
- 24 -: Antriebsstummel
- 25 -: Ablauföffnung
- 26 -: Trommeldrehrichtung
- 27 -: Ausnehmung
- 28 -: Bohrung
- 29 -: Lagerblech
- 30 -: Zwischenräume
- 31 -: Unterkannte Abstreiferspitze
- 32 -: Oberkannte Förderkamm
- 33 - 34 -: Vertiefung
- 35 -: erweiterter Schaft Druckplatte
- 36 -: Gewinde
- 37 -: Sicke
- 38 -: Stützelement
- 39 -: Prägung
- 40 -: Auflage
- 41 -: Trommelmitte
- x -: Öffnungswinkel
- b -: Abstand zwischen Abstreifer
- b' -: Abstand hinten zwischen Abstreifer
- e -: Spalt zwischen Abstreifer Spitze und Druckplatte
- s -: Spalt zwischen Unterkannte Abstreifer und Förderkamm
- f -: Spalt zwischen Druckplatte und Stützelement
- FS -: Förderspalt
- m1 -: Montageschritt 1
- m2 -: Montageschritt 2
- m3 -: Montageschritt 3

## Patentansprüche

1. Aufnahmevorrichtung (1) für eine Erntemaschine, die mit einer quer zur Aufnahmerichtung angeordneten, während der Aufnahme von Erntegut rotierenden Trommel (3) ausgestattet ist, wobei die Trommel (3) mit einer Anordnung nicht steuerbarer Aufnahmezinken (13, 13') besetzt ist, die am Boden liegendes Erntegut aufnehmen und an eine nachgeordnete Vorrichtung übergeben, wozu in der Mantelfläche (5, 6) der Trommel (3) Öffnungen (7) angeordnet sind, in die jeweils Aufnahmezinken (13, 13') einsetzbar sind, wobei in die fensterartige Öffnung (7) eine Zinkentasche (19, 19') einsetzbar und an der fensterartigen Öffnung (7) formschlüssig festlegbar ist, und mindestens ein Aufnahmezinken (13, 13') mit seinen sockelartigen Endbereichen (15, 15') in die Zinkentasche (19, 19') einsetzbar und mittels je einer den sockelartigen Endbereich (15, 15') der Aufnahmezinken (13, 13') und/oder die Zinkentasche (19, 19') und die Trommel (3) zumindest abschnittsweise übergreifenden Druckplatte (16, 16') so an der Trommel (3) festlegbar ist, dass die Zinkentasche (19, 19') relativ zu der fensterartigen Öffnung (7) in der Mantelfläche (5, 6) der Trommel (3) und die sockelartigen Endbereiche (15, 15') des Aufnahmezinken (13, 13') relativ zu der Zinkentasche (19, 19') kraftschlüssig verspannt festgelegt sind,
**dadurch gekennzeichnet, dass**
eine Verschraubung (18, 36) die Druckplatte (16, 16') so an der Zinkentasche (19, 19') und der Trommel (3) kraftschlüssig verspannt festlegt, dass der sockelartige Endbereich (15, 15') der Aufnahmezinken (13, 13') in der Zinkentasche (19, 19') und die Zinkentasche (19, 19') an der Trommel (3) kraftschlüssig geklemmt und die Druckplatte (16, 16') an den Außenumfang (6) der Trommel (3) gedrückt ist.

2. Aufnahmevorrichtung (1) gemäß Anspruch 1, **dadurch gekennzeichnet, dass** der sockelartige Endbereich (15, 15') des Aufnahmezinken (13, 13') und der zugehörigen Zinkentasche (19, 19') an der Trommel (3) durch eine Verschraubung (18, 36) der Druckplatte (16, 16') kraftschlüssig verspannt an der Trommel (3) festgelegt ist.

3. Aufnahmevorrichtung (1) gemäß einem der Ansprüche 1oder 2, **dadurch gekennzeichnet, dass** im Bereich des Bodens der Zinkentasche (19, 19') mindestens ein Gewindeabschnitt (36) angeordnet ist, in den mindestens eine Klemmschraube (18) von oberhalb der Druckplatte (16, 16') einschraubbar ist, die die Zinkentasche (19, 19'), den sockelartigen
Endbereich (15, 15') der Aufnahmezinken (13, 13') und die Druckplatte (16, 16') im Bereich der fensterartigen Öffnung (7) an der Trommel (3) klemmend festlegt.

4. Aufnahmevorrichtung (1) gemäß einem der vorstehenden Ansprüche,
**dadurch gekennzeichnet, dass** Aufnahmezinken (13, 13') und/oder
Zinkentasche (19, 19') und/oder Druckplatte (16, 16') bei Bedarf jeweils einzeln auswechselbar sind.

5. Aufnahmevorrichtung (1) gemäß einem der vorstehenden Ansprüche,
**dadurch gekennzeichnet, dass** die einen vertieften Aufnahmeraum für den sockelartigen Endbereich (15, 15') der Aufnahmezinken (13, 13') aufweisende Zinkentasche (19, 19') zumindest abschnittsweise kragenartig ausgebildete, vom Rand der Zinkentasche (19, 19') nach außen abstehende Nocken (20, 20', 21, 21') aufweist.

6. Aufnahmevorrichtung (1) gemäß Anspruch 5, **dadurch gekennzeichnet,**
**dass** die nach außen abstehenden Nocken (20, 20', 21, 21') in Tiefenrichtung der Zinkentasche (19, 19') unterschiedlich von der Unterfläche der Zinkentasche (19, 19') derart beabstandet sind, dass einander zugeordnete Nocken (20, 20', 21, 21'), den Rand der fensterartigen Öffnung (7) in der Mantelfläche (5, 6) der Trommel (3) abschnittsweise zwischen sich aufnehmend, auf den Rand der fensterartigen Öffnung (7) aufsteckbar sind.

7. Aufnahmevorrichtung (1) gemäß einem der Ansprüche 5 oder 6, **dadurch gekennzeichnet, dass** erste, nach außen abstehende Nocken (21, 21') der Zinkentasche (19, 19') nach dem Aufstecken der Zinkentasche (19, 19') auf die Ränder der fensterartigen Öffnung (7) auf der Außenfläche (6) der Trommel (3) zu liegen kommen, während zweite, nach außen abstehenden Nocken (20, 20') der Zinkentasche (19, 19') an der Innenfläche (5) der Trommel (3) zu liegen kommen

8. Aufnahmevorrichtung (1) gemäß einem der Ansprüche 5 bis 7, **dadurch gekennzeichnet, dass** die Form und Außenabmessungen von Zinkentasche (19, 19') und von der Zinkentasche (19, 19') nach außen abstehenden Nocken (20, 20', 21, 21') sowie die Form und die Maße der fensterartigen Öffnung (7) in der Mantelfläche (5, 6) der Trommel (3) derart aufeinander abgestimmt sind, dass die Zinkentasche (19, 19')radial in die fensterartige Öffnung (7) einsteckbar und anschließend in der fensterartigen Öffnung (7) in Umfangsrichtung des Trommelmantels (3) um einen festlegbaren Betrag verschiebbar ist.

9. Aufnahmevorrichtung (1) gemäß Anspruch 8, **dadurch gekennzeichnet, dass** die fensterartige Öffnung (7) in der Mantelfläche (5, 6) der Trommel (3) eine derartige Formgebung aufweist, dass die Zinkentasche (19, 19') nach dem radialen Verschieben in der fensterartigen Öffnung (7) an dem Rand der fensterartigen Öffnung (7) formschlüssig festgelegt ist.

10. Aufnahmevorrichtung (1) gemäß Anspruch 9, **dadurch gekennzeichnet, dass** die nach außen abstehenden ersten und zweiten Nocken (20, 20', 21, 21') der in die fensterartige Öffnung (7) eingesetzten Zinkentasche (19, 19') in Umfangsrichtung (26) des Trommelmantels (3) beidseitig den Rand der fensterartigen Öffnung (7) der Trommel (3) abschnittsweise umgreifen und den Rand der fensterartigen Öffnung (7) der Trommel (3) zwischen sich aufnehmen.

11. Aufnahmevorrichtung (1) gemäß einem der vorstehenden Ansprüche, **dadurch gekennzeichnet, dass** die Druckplatte (16, 16') Ausnehmungen (27) aufweist, in die die nach außen abstehenden, auf der Mantelfläche (6) der Trommel (3) aufliegenden Nocken (21, 21') der Zinkentasche (19, 19') zumindest abschnittsweise eingreifen und gesichert sind.

12. Aufnahmevorrichtung (1) gemäß einem der vorstehenden Ansprüche, **dadurch gekennzeichnet, dass** die Druckplatte (16, 16') den Bereich der fensterartigen Öffnung (7) mit der darin angeordneten Zinkentasche (19, 19') zumindest abschnittsweise abdeckt.

13. Aufnahmevorrichtung (1) gemäß einem der vorstehenden Ansprüche, **dadurch gekennzeichnet, dass** zumindest an einzelnen der Druckplatten (16, 16') mindestens ein Förderelement (17), vorzugsweise eine kammartige Anordnung mehrerer Förderelemente (17), angeordnet ist, dass das Erntegut bei der Drehung der Trommel (3) zusätzlich in Drehrichtung (26) mitnimmt.

14. Aufnahmevorrichtung (1) gemäß 13 **dadurch gekennzeichnet, dass** jedes Förderelement (17) mit den zugeordneten, im Bereich der Trommel (3) angeordneten Abstreifern (10) derart zusammenwirkt, dass die Abstreifer (10, 10'), insbesondere die Spitzen (11, 11') der Abstreifer (10, 10'), und/oder die Zwischenräume (30) zwischen den Abstreifern (10, 10'), und/oder die Förderspalte (FS) von sich ablagerndem Erntegut bei der Rotation (26) der Trommel (3) befreit werden.

15. Aufnahmevorrichtung (1) gemäß einem der Ansprüche 13 und 14, **dadurch gekennzeichnet, dass** Förderelemente (17) und Abstreifer (10, 10') derart geformt und angeordnet sind, dass beim Durchlaufen der Förderelemente(17) durch den Bereich der Abstreifer (10, 10') und der Förderspalte (FS) ein Durchlaufspalt (e) zwischen Förderelementen (17), und Abstreifern (10, 10'), und Förderspalten (FS) eingehalten ist.

## Claims

1. A pickup device (1) for a harvesting machine, which is equipped with a drum (3) that rotates while picking up crop material and is arranged transversely to the pickup direction, wherein the drum (3) is fitted with an arrangement of non-controllable pickup tines (13, 13'), which pickup crop material lying on the ground and transfer the same to a downstream device, for the purpose of which in the shell surface (5, 6) of the drum (3), openings (7) are arranged, into which in each case pickup tines (13, 13') can be inserted, wherein in the window-like opening (7) a tine pocket (19, 19') can be inserted and can be positively fixed on the window-like opening (7), and at least one pickup tine (13, 13') can be inserted with its base-like end regions (15, 15') into the tine pocket (19, 19'), by means of a pressure plate (16, 16') each engaging at least in portions over the base-like end region (15, 15') of the pickup tines (13, 13') and/or the tine pocket (19, 19') and the drum (3) can be fixed to the drum (3) so that the tine pocket (19, 19') is fixed relative to the window-like opening (7) in the shell surface (5, 6) of the drum (3) and the base-like end regions (15, 15') of the pickup tines (13, 13') relative to the tine pocket (19, 19') in a non-positively clamped manner,
**characterised in that** a screw connection (18, 36) fixes the pressure plate (16, 16') on the tine pocket (19, 19') and the drum (3) in a non-positively clamped manner so that the base-like end region (15, 15') of the pickup tines (13, 13') is non-positively clamped in the tine pocket (19, 19') and the tine pocket (19, 19') is non-positively clamped on the drum (3) and the pressure plate (16, 16') is pressed against the outer circumference (6) of the drum (3).

2. The pickup device (1) according to Claim 1, **characterised in that** the base-like end region (15, 15') of the pickup tines (13, 13') and the associated tine pocket (19, 19') is fixed on the drum (3) by a screw connection (18, 36) of the pressure plate (16, 16') in a non-positively clamped manner.

3. The pickup device (1) according to any one of the Claims 1 or 2, **characterised**
**in that** in the region of the bottom of the tine pocket (19, 19') at least one thread portion (36) is arranged, into which at least one clamping screw (18) can be screwed from above the pressure plate (16, 16'), which fixes, by clamping, the base-like end region (15, 15') of the pickup tines (13, 13') and the pressure plate (16, 16') on the drum (3) in the region of the window-like opening (7).

4. The pickup device (1) according to any one of the preceding claims, **characterised in that** pickup tines (13, 13') and/or tine pocket (19, 19') and/or pressure plate (16, 16') are each individually exchangeable if required.

5. The pickup device (1) according to any one of the preceding claims, **characterised in that** the tine pocket (19, 19') comprising a recessed receiving space for the base-like end region (15, 15') of the pickup tines (13, 13') which is at least in portions formed collar-like comprises lugs (20, 20', 21, 21') projecting from the edge of the tine pocket (19, 19') to the outside.

6. The pickup device (1) according to Claim 5, **characterised in that** the lugs (20, 20', 21, 21') projecting to the outside are spaced apart differently in the depth direction of the tine pocket (19, 19') from the bottom surface of the tine pocket (19, 19') **in that** lugs (20, 20', 21, 21') assigned to one another, between them receiving the edge of the window-like opening (7) in the shell surface (5, 6) of the drum (3) at least in portions, can be fitted onto the edge of the window-like opening (7).

7. The pickup device (1) according to any one of the Claims 5 or 6, **characterised**
**In that** first lugs (21,21') of the tine pocket (19, 19') projecting to the outside, following the fitting of the tine pocket (19, 19') onto the edges of the window-like opening (7), come to lie on the outer surface (6) of the drum (3), while the second lugs (20, 20') of the tine pocket (19, 19') projecting to the outside come to lie on the inner surface (5) of the drum (3).

8. The pickup device (1) according to any one of the Claims 5 to 7, **characterised**
**in that** the shape and outer dimensions of tine pocket (19, 19') and lugs (20, 20', 21, 21') projecting from the tine pocket (19, 19') to the outside and the shape and the dimensions of the window-like opening (7) in the shell surface (5, 6) of the drum (3) are matched to one another in such a manner that the tine pocket (19, 19') can be radially inserted into the window-like opening (7) and can consequently be displaced in the window-like opening (7) in the circumferential direction of the drum shell (3) by a specifiable amount.

9. The pickup device (1) according to Claim 8, **characterised in that** the window-like opening (7) in the shell surface (5, 6) of the drum (3) has such a shape that the tine pocket (19, 19') following the radial displacement in the window-like opening (7) is non-positively fixed on the edge of the window-like opening (7).

10. The pickup device (1) according to Claim 9, **characterised in that** the first and second lugs (20, 20', 21, 21') projecting to the outside of the tine pocket (19, 19') inserted in the window-like opening (7) engage in the circumferential direction (26) of the drum shell (3) on both sides over the edge of the window-like opening (7) of the drum (3) in portions and between them receive the edge of the window-like opening (7) of the drum (3).

11. The pickup device (1) according to any one of the preceding claims, **characterised in that** the pressure plate (16, 16') has recesses (27) in which the lugs (21, 21') of the tine pocket (19, 19') projecting to the outside and lying on the shell surface (6) of the drum (3) engage and are secured at least in portions.

12. The pickup device (1) according to any one of the preceding claims, **characterised in that** the pressure plate (16, 16') covers the region of the window-like opening (7) with the tine pocket (19, 19') arranged therein, at least in portions.

13. The pickup device (1) according to any one of the preceding claims, **characterised in that** at least on individual ones of the pressure plates (16, 16'), at least one transport element (17), preferentially a comb-like arrangement of multiple transport elements (17), additionally takes along the crop material in the direction of rotation (26) during the rotation of the drum (3).

14. The pickup device (1) according to Claim 13 **characterised in that** each transport element (17) interacts with the associated strippers (10) arranged in the region of the drum (3) in such a manner that the strippers (10, 10'), in particular the tips (11, 11') of the strippers (10, 10') and/or the intermediate spaces (30) between the strippers (10, 10') and/or the transport gaps (FS) are freed of depositing crop material upon the rotation (26) of the drum (3).

15. The pickup device (1) according to any one of the Claims 13 or 14, **characterised in that** the transport elements (17) and strippers (10, 10') are shaped and arranged in such a manner that during the passing of the transport elements (7) through the region of the strippers (10, 10') and the transport gaps (FS), a passage gap (e) between transport elements (17) and strippers (10, 10') and transport gaps (FS) is maintained.

## Revendications

1. Dispositif de réception (1) pour une moissonneuse, qui est équipé d'un tambour (3) disposé de manière transversale par rapport à la direction de réception, tournant pendant la réception de produits de récolte, dans lequel le tambour (3) est pourvu d'un ensemble de dents de réception (13, 13') ne pouvant pas être commandées, qui reçoivent des produits de récolte couchés sur le sol et les transmettent à un dispositif disposé en aval, des ouvertures (7) étant disposées à cet effet dans la surface enveloppante (5, 6) du tambour (3), dans lesquelles des dents de réception (13, 13') respectivement peuvent être insérées, dans lequel un compartiment de dents (19, 19') peut être inséré dans l'ouverture (7) de type fenêtre et peut être fixé par complémentarité de forme sur l'ouverture (7) de type fenêtre, et au moins une dent de réception (13, 13') peut être insérée avec ses zones d'extrémité (15, 15') de type socle dans le compartiment de dents (19, 19') et peut être fixée sur le tambour (3) au moyen de respectivement une plaque de pression (16, 16') surmontant au moins par endroits la zone d'extrémité (15, 15') de type socle des dents de réception (13, 13') et/ou le compartiment de dents (19, 19') et le tambour (3) de telle sorte que le compartiment de dents (19, 19') est fixé sous tension à force par rapport à l'ouverture (7) de type fenêtre dans la surface enveloppante (5, 6) du tambour (3) et les zones d'extrémité (15, 15') de type socle des dents de réception (13, 13') sont fixées sous tension à force par rapport au compartiment de dents (19, 19'),
**caractérisé en ce que**
un vissage (18, 36) fixe sous tension à force la plaque de pression (16, 16') de telle sorte sur le compartiment de dents (19, 19') et le tambour (3) que la zone d'extrémité (15, 15') de type socle des dents de réception (13, 13') est coincée à force dans le compartiment de dents (19, 19') et le compartiment de dents (19, 19') est coincé à force sur le tambour (3) et la plaque de pression (16, 16') est pressée sur la périphérie extérieure (6) du tambour (3).

2. Dispositif de réception (1) selon la revendication 1, **caractérisé en ce que** la zone d'extrémité (15, 15') de type socle des dents de réception (13, 13') et du compartiment de dents (19, 19') associé au tambour (3) est fixée sous tension à force sur le tambour (3) par un vissage (18, 36) de la plaque de pression (16, 16').

3. Dispositif de réception (1) selon l'une quelconque des revendications 1 ou 2, **caractérisé en ce qu'**est disposée dans la zone du fond du compartiment de dents (19, 19') au moins une section filetée (36), dans laquelle au moins une vis de serrage (18) peut être vissée depuis le dessus de la plaque de pression (16, 16'), qui fixe par serrage le compartiment de dents (19, 19'), la zone d'extrémité (15, 15') de type socle des dents de réception (13, 13') et la plaque de pression (16, 16') dans la zone de l'ouverture (7) de type fenêtre sur le tambour (3).

4. Dispositif de réception (1) selon l'une quelconque des revendications précédentes,
**caractérisé en ce que** les dents de réception (13, 13') et/ou le compartiment de dents (19, 19') et/ou la plaque de pression (16, 16') peuvent être interchangés respectivement individuellement si besoin.

5. Dispositif de réception (1) selon l'une quelconque des revendications précédentes,
**caractérisé en ce que** le compartiment de dents (19, 19') présentant un espace de réception renfoncé pour la zone d'extrémité (15, 15') de type socle des dents de réception (13, 13') présente au moins par endroits des cames (20, 20', 21, 21') réalisées en porte-à-faux, dépassant vers l'extérieur du bord du compartiment de dents (19, 19').

6. Dispositif de réception (1) selon la revendication 5, **caractérisé en ce**
**que** les cames (20, 20', 21, 21') dépassant vers l'extérieur sont tenues à distance dans le sens de la profondeur du compartiment de dents (19, 19') différemment de la face inférieure du compartiment de dents (19, 19') de telle manière que des cames (20, 20', 21, 21') associées entre elles recevant entre elles par endroits le bord de l'ouverture (7) de type fenêtre dans la face enveloppante (5, 6) du tambour (3), peuvent être enfichées sur le bord de l'ouverture (7) de type fenêtre.

7. Dispositif de réception (1) selon l'une quelconque des revendications 5 ou 6, **caractérisé en ce que** des premières cames (21, 21') dépassant vers l'extérieur du compartiment de dents (19, 19') viennent se placer sur la face extérieure (6) du tambour (3) après l'enfichage du compartiment de dents (19, 19') sur les bords de l'ouverture (7) de type fenêtre, tandis que des deuxièmes cames (20, 20') dépassant vers l'extérieur du compartiment de dents (19, 19') viennent se placer sur la surface intérieure (5) du tambour (3).

8. Dispositif de réception (1) selon l'une quelconque des revendications 5 à 7, **caractérisé en ce que** la forme et les dimensions extérieures du compartiment de dents (19, 19') et de cames (20, 20', 21, 21') dépassant vers l'extérieur du compartiment de dents (19, 19') ainsi que la forme et les dimensions de l'ouverture (7) de type fenêtre dans la face enveloppante (5, 6) du tambour (3) sont adaptées les unes aux autres de telle manière que le compartiment de dents (19, 19') peut être emboîté radialement dans l'ouverture (7) de type fenêtre puis peut être coulissé d'une valeur pouvant être fixée dans la direction périphérique de l'enveloppe de tambour (3) dans l'ouverture (7) de type fenêtre.

9. Dispositif de réception (1) selon la revendication 8, **caractérisé en ce que** l'ouverture (7) de type fenêtre présente dans la face enveloppante (5, 6) du tambour (3) une telle mise en forme que le compartiment de dents (19, 19') est fixé par complémentarité de forme sur le bord de l'ouverture (7) de type fenêtre après le coulissement radial dans l'ouverture (7) de type fenêtre.

10. Dispositif de réception (1) selon la revendication 9, **caractérisé en ce que** les premières et deuxièmes cames (20, 20', 21, 21') dépassant vers l'extérieur du compartiment de dents (19, 19') inséré dans l'ouverture (7) de type fenêtre entourent par endroits de part et d'autre le bord de l'ouverture (7) de type fenêtre du tambour (3) dans la direction périphérique (26) de l'enveloppe de tambour (3) et reçoivent entre elles le bord de l'ouverture (7) de type fenêtre du tambour (3).

11. Dispositif de réception (1) selon l'une quelconque des revendications précédentes, **caractérisé en ce que** la plaque de pression (16, 16') présente des évidements (27), avec lesquels les cames (21, 21') dépassant vers l'extérieur, reposant sur la face enveloppante (6) du tambour (3) du compartiment de dents (19, 19') viennent en prise au moins par endroits et sont bloquées.

12. Dispositif de réception (1) selon l'une quelconque des revendications précédentes, **caractérisé en ce que** la plaque de pression (16, 16') recouvre au moins par endroits la zone de l'ouverture (7) de type fenêtre avec le compartiment de dents (19, 19') disposé dans celle-ci.

13. Dispositif de réception (1) selon l'une quelconque des revendications précédentes, **caractérisé en ce qu'**au moins un élément de convoyage (17), de préférence un ensemble de type peigne de plusieurs éléments de refoulement (17), est disposé au moins sur certaines des plaques de pression (16, 16'), qui entraîne les produits de récolte lors de la rotation du tambour (3) en supplément dans la direction de rotation (26).

14. Dispositif de réception (1) selon la revendication 13, **caractérisé en ce que** chaque élément de convoyage (17) coopère avec les racleurs (10) associés disposés dans la zone du tambour (3) de telle manière que les racleurs (10, 10'), en particulier les pointes (11, 11') des racleurs (10, 10'), et/ou les espaces intermédiaires (30) entre les racleurs (10, 10'), et/ou la fente de convoyage (FS) sont libérés des produits de récolte qui s'y accumulent lors de la rotation (26) du tambour (3).

15. Dispositif de réception (1) selon l'une quelconque des revendications 13 et 14, **caractérisé en ce que** les éléments de convoyage (17) et les racleurs (10, 10') sont formés et disposés de telle manière que lors du passage des éléments de convoyage (17) à travers la zone des racleurs (10, 10') et de la fente de convoyage (FS), une fente de passage (e) est conservée entre les éléments de convoyage (17) et les racleurs (10, 10') et les fentes de convoyage (FS).
